**Europäisches Patentamt**

**European Patent Office**

**Office européen des brevets**

(19)

(11) Veröffentlichungsnummer : **0 311 771 B1**

# EUROPÄISCHE PATENTSCHRIFT

(12)

(45) Veröffentlichungstag der Patentschrift :
31.07.91 Patentblatt 91/31

(21) Anmeldenummer : 88113289.8

(22) Anmeldetag : 17.08.88

(51) Int. Cl.⁵ : **B61D 17/00, B61D 17/04, B61D 1/06, B62D 47/02, B64D 11/00**

(54) **Fahrzeug-Innenausbau.**

(30) Priorität : 12.10.87 CH 3989/87

(43) Veröffentlichungstag der Anmeldung :
19.04.89 Patentblatt 89/16

(45) Bekanntmachung des Hinweises auf die
Patenterteilung :
31.07.91 Patentblatt 91/31

(84) Benannte Vertragsstaaten :
AT CH DE ES FR GB IT LI

(56) Entgegenhaltungen :
DE-A- 2 031 546
DE-A- 3 244 041
FR-A- 2 424 736
FR-A- 2 446 752

(56) Entgegenhaltungen :
GB-A- 798 228
AVIATION WEEK & SPACE TECHNOLOGY, 5.
Oktober 1987, Seite 41; E.H. PHILLIPS;
"McArtor cites quality control in call for inspection program"

(73) Patentinhaber : INVENTIO AG
Seestrasse 55
CH-6052 Hergiswil NW (CH)

(72) Erfinder : Perzl, Leopold
Reherstrasse 24a
CH-9016 St. Gallen (CH)
Erfinder : Zortea, August
Promenadenstrasse 13
CH-9400 Rorschach (CH)
Erfinder : Anderegg, Kurt, Dipl.-Ing. ETH.
Thalerstrasse 83
CH-9424 Rheineck (CH)

## Beschreibung

Die vorliegende Erfindung betrifft einen Fahrzeug-Innenausbau, insbesondere von Eisenbahnwagen in ein- oder zweistöckiger Ausführung mittels einer Anzahl vom Wagenkasten konstruktiv getrennt ausserhalb des Fahrzeuges fertig vorfabrizierten Funktionseinheiten, welche im Wagenkasten zu einer grösseren, mehrere Funktionen enthaltenen Montageeinheit zusammenfügbar und im Wagenkasten an vorhandenen Fixpunkten befestigbar sind. In einem Patentdokument GB-A-798228 ist ein Verfahren beschrieben, nach welchem ganze oder halbe Einrichtungsmodule inform von fertig ausgerüsteten Abteilen, Abteilstücken und Toiletten vom Wagenkasten konstruktiv getrennt ausserhalb des Fahrzeuges fertig vorfabriziert werden. Diese Einrichtungsmodule werden anlässlich der Fertigmontage der Eisenbahnwagen durch entsprechende Oeffnungen im Dach oder durch eine offene Stirnseite an die vorgesehene Position eingeschoben und an vobereiteten Befestigungspunkten fixiert. Die heute praktizierte Eisenbahnwagentechnologie lässt solche Verfahren nicht mehr zu, weil die Wagenkörper als selbsttragende, geschlossene Gebilde ohne separate Chassis gebaut werden und die hierzu nötigen grossen Oeffnungen im Dach oder an den Stirnseiten mit den entsprechenden Randverstärkungen die Vorteile der selbsttragenden Bauweise zunichte machen würden.

Es ist ferner bekannt, für den rationellen Bau und Innenausbau von Eisenbahnwagen, insbesondere Personenwagen, Strangpressprofile zu verwenden, welche so ausgebildet sind, dass sie sowohl tragende Funktion ausüben wie auch in der Lage sind, Bauteile für den Innenausbau aufzunehmen. Es ist allgemein üblich, diese Profile so auszubilden, dass sich Kanäle, C-Schienen und Kammern für die Aufnahme von Bauteilen ergeben. Die Offenlegungsschrift DE-A-3406609 zeigt eine Konstruktion, bei welcher ein Dachlängsträger in Form eines Strangpressprofiles so ausgebildet ist, dass er mit einer Seite die Aussenkontur und -Fläche bildet, Hohlräume mit Versteifungseffekt aufweist, Kanäle für Kabelstränge und Druckluftrohre, C-Schienen, Führungen, Anschläge und Kammern für die Aufnahme von mechanischen und elektrischen Bauteilen besitzt sowie Ansatzpunkte für die Innenverkleidung bzw. für Abdeckungen aufweist.

Der Nachteil dieser Konstruktion besteht darin, dass der Einbau der Bauteile bei den knappen Platzverhältnissen und der dadurch gegebenen, nur bedingt guten Zugänglichkeit erschwert wird, wodurch der Aufwand für den Innenausbau immer noch relativ gross ist. Ferner sind Schnappdeckel und grosse, gut sichtbare Fugen nicht sehr vandalensicher und können auch ästhetisch nicht befriedigen.

Der vorliegenden Erfindung liegt die Aufgabe zugrunde, für den Innenausbau von Fahrzeugen eine bessere Gestaltung zu finden und den Aufwand generell zu reduzieren.

Diese Aufgabe wird durch die in den Ansprüchen gekennzeichnete Erfindung gelöst.

Die durch die Erfindung erreichten Vorteile sind im wesentlichen darin zu sehen, dass die technischen Möglichkeiten von Strangpressprofilen besser ausgenützt und mehr technische Funktionen zentral zusammengefasst werden. Daraus folgt, dass mehrere entsprechend ausgebildete Strangpressprofile Träger von Funktionseinheiten sind, welche durch ihre Ausbildung im einzelnen das Anschrauben verschiedener Bauteile ermöglichen, durch gekrümmte Nut-Federverbindung im Wagenkasten formschlüssig zusammengefügt werden, mit einem Teil ihrer Aussenfläche die Verkleidungsfläche im Bereich Seitenwand-Decke bilden und an den mit dem Wagenkörper fest verbundenen C-Schienen angeschraubt werden können. Fluchtgenaues und absatzfreies Aneinanderreihen in Längsrichtung wird durch entsprechend stirnseitig plazierte Passstifte und -Bohrungen bei einem Teil der Profile garantiert.

Ein weiterer Vorteil liegt darin, dass die Wartung der Funktionseinheiten im Betrieb aufgrund entsprechender Konstruktionsmerkmale durch gute Zugänglichkeit und leichte Auswechselbarkeit stark erleichtert wird. Durch die Kombination der Funktionen Beleuchtung, Lautsprecher, Rollo, Gepäckablage, Kabelkanal und Teilabdeckung in einer einzigen, aus mehreren vorfabrizierten Funktionseinheiten bestehenden Montageeinheit, ergeben sich weitere Einsparungen infolge vereinfachter Verkabelung und Deckenverkleidung.

In der beiliegenden Zeichnung ist ein Ausführungsbeispiel der Erfindung dargestellt, welches im folgenden näher erläutert wird. Es zeigen :

Fig. 1    einen Querschnitt durch einen Eisenbahnpersonenwagen in zweistöckiger Ausführung,

Fig. 2    einen Querschnitt durch eine zusammengefügte und eingebaute Montageeinheit.

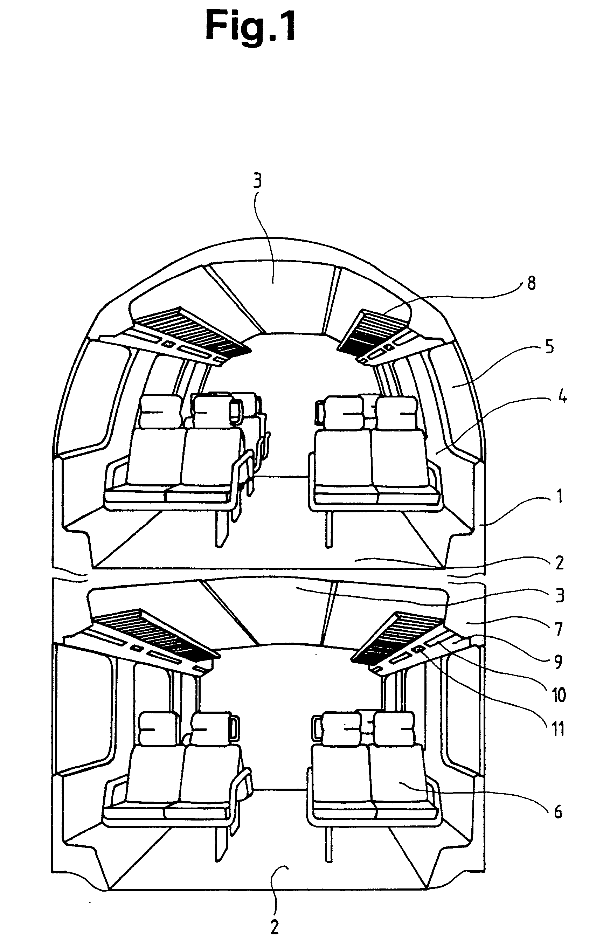

In der Fig. 1 ist mit 1 ein zweistöckiger Wagenkasten bezeichnet, welcher Böden 2, Decken 3, Wände 4 mit Fenstern 5 und Fahrgastsitze 6 aufweist. Oberhalb der Fenster 5 sind in Wagenlängsrichtung Montageeinheiten 7 angeordnet. Mit 8 sind Gepäckablagen, mit 9 Verkleidungsflächen, mit 10 Lichtaustrittsöffnungen und mit 11 Lautsprecheröffnungen bezeichnet.

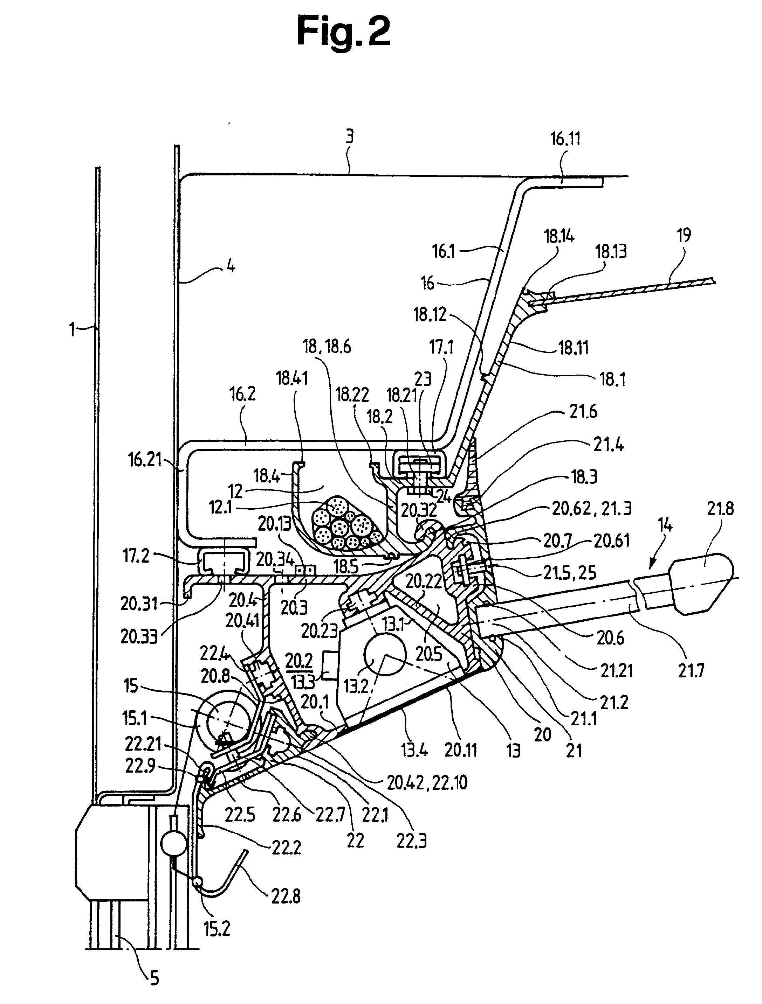

Die Montageeinheit 7 besteht gemäss Fig. 2 aus Funktionseinheiten 12, 13, 14, 15, wobei 12 ein Kabelkanal, 13 eine Beleuchtung, 14 eine Gepäckablage und 15 ein Rollo ist. 16 ist ein winkelförmig abgekantetes Halteprofil, dessen einer Schenkel 16.1 eine Abkröpfung 16.11 und dessen anderer Schenkel 16.2 eine U-förmige Abkröpfung 16.21 aufweist. Das Halteprofil ist über die Abkröpfung 16.11 mit der Decke 3 und über den Steg der Abkröpfung 16.21 an der Wand 4 des Wagenkastens 1 lösbar befestigt. Eine erste C-Schiene 17.1 ist am an dem Schenkel 16.1 angrenzenden Ende des Schenkels 16.2 und eine zweite C-Schiene 17.2 am waagrechten Ende der Abkröpfung 16.21 des Halteprofils 16 mit nach dem Boden weisender Öffnung befestigt.

Der Kabelkanal 12 besteht aus einem U-förmigen Profil 18, dessen schräg nach oben ragender Schenkel 18.1 eine im Fahrgastraum sichtbare Oberfläche 18.11, eine rückseitige Verstärkungsrippe 18.12 und am oberen Ende eine nach rechts offene Nut 18.13 für das Einfügen der Deckenverkleidungsplatte 19 aufweist. Der über dem senkrechten Mittelsteg 18.6 waagrecht nach rechts abgewinkelte Zwischensteg 18.2 weist eine Querbohrung 18.21 auf. Der Zwischensteg 18.2 ist linksseitig mit einer nach oben gerichteten, am Ende wulstartig verdichteten Nase 18.22 abgeschlossen. Der L-förmige Fussteil des Profiles 18 ist als sphärisch nach oben gekrümmte Nase 18.3 ausgebildet. Der eigentliche Kabelkanal 12 wird mit dem, zusammen mit dem Mittelsteg 18.6 ein U-formenden Schenkel 18.4 gebildet, dessen oberes Ende eine nach innen wulstförmige Verdickung 18.41 ist. Das Profil weist ferner am oberen Ende des Schenkels 18.1 einen ersten dreiviertelkreisförmigen Kanal 18.4 und am unteren Ende des Mittelsteges 18.6 einen zweiten dreiviertelkreisförmigen Kanal 18.5 für die Aufnahme von Passstiften auf.

20 ist ein kastenförmiges Profil der Funktioneinheit Beleuchtung. Ein grosser Hohlraum 20.2 ist abgegrenzt durch einen oberen waagrechten Steg 20.3, eine um ca. 45° schräg nach unten rechts verlaufende Verstärkungsrippe 20.22, eine schräg nach unten links verlaufende Wand 20.1 mit einer sichtbaren Oberfläche 20.11 und einer linken in der Mitte leicht nach aussen geknickten Wand 20.4, welche senkrecht nach oben in den waagrechten Steg 20.3 mündet. In der rechten oberen Ecke des Hohlraumes 20.2 ist ein C-schienenförmiger Kanal 20.23 mit Öffnung nach unten, leicht schräg nach rechts, ausgeformt. Ein kleiner dreieckiger Hohlraum 20.5 ist abgegrenzt durch die Verstärkungsrippe 20.22, dem leicht schräg nach oben fortgesetzten Ende des Steges 20.3 und einer Wand 20.6. Der waagrechte Steg 20.3 überragt das rechtwinklig von unten her einmündende Ende der Wand 20.4 nach links und endet mit einer kurzen rechtwinklig nach unten geformten Nase 20.31. Der nach links herausragende Teil des Steges 20.3 weist eine Querbohrung 20.33 auf. Eine weitere Querbohrung 20.34 mündet in den Hohlraum 20.2. Die Wand 20.4 hat am oberen Ende der unteren Hälfte nach links aussen einen C-schienenförmigen Kanal 22.41 ausgeformt, dessen Öffnung im Winkel von ca. 30° von der Waagrechten nach links unten weist. Die linke untere Ecke des Profiles 20 weist eine sphärisch gekrümmte, nach links offene Nut 20.42 auf. Die, den dreieckigen Hohlraum begrenzende äussere Seitenwand 20.6 hat in diesem Bereich einen nach aussen geöffneten C-schienenförmigen Kanal 20.61 eingeformt. Das Profil 20 weist ferner in der rechten oberen Ecke ein die sphärisch gekrümmte Nase 18.3 umschliessendes, hakenförmiges, nach unten ein offenes U bildendes Ende 20.32 auf. Zwischen dem Ansatz des hakenförmigen Endes 20.32 und der oberen Seitenflanke des C-schienenförmigen Kanals 20.61 ist eine nach oben offene Nut 20.62 eingeformt. Auf der Aussenseite der rechten, die Nut 20.62 bildenden Seitenwand, ist ein erster dreiviertelkreisförmiger Kanal 20.7 und in der Ecke zwischen der unteren Aussenseite des C-schienenförmigen Kanals 20.61 und dem unteren Teil der linken Seitenwand 20.4 ein zweiter dreiviertelkreisförmiger Kanal 20.8 eingeformt, ebenfalls für die Aufnahme von Passstiften.

Ein hochkant angeordnetes Profil 21 hat eine sichtbare glatte Oberfläche 21.1, welche im unteren Teil über eine Rundung absatzfrei in die Oberfläche 20.11 des Profiles 20 übergeht. Am unteren dickeren Teil des Profiles 21 ist ein nach der sichtbaren Oberfläche hin offener rechteckiger Kanal 21.2 eingeformt. Je eine Rille 21.21 in den Seitenflanken des Kanals 21.2 dienen einer hier nicht näher beschriebenen Einpresstechnik eines Trägerholmes 21.7. Die Trägerholme 21.7 haben an ihrem anderen Ende ein dreieckiges, an den Ecken abgerundetes Randprofil 21.8 aufgepresst. Der mittlere, dünne Teil des Profiles 21 weist eine Querbohrung 21.5 auf und in der oberen Stirnfläche ist ein schwalbenschwanzförmiger Kanal 21.4 für die Aufnahme eines Dichtlippenprofiles 21.6 eingelassen. Am oberen Teil der Rückseite des Profiles 21 befindet sich eine zuerst waagrecht links herausragende und am Ende nach unten gerichtete Nase 21.3, welche in die Nut 20.62 des Profiles 20 eingreift. Das Profil 22 hat eine sichtbare Oberfläche 22.1 mit einer Querbohrung 22.6 und einem nach dem Wagenboden hin gebogenen, am Ende verdickten Schenkel 22.2. Der Schenkel 22.2 überragt den dünnen Profilteil zusätzlich mit einer Nase 22.21 nach oben. In der Nase 22.21 ist eine weitere Querbohrung 22.9 vorhanden. Das dem Schenkel 22.2 gegenüberliegende Ende des Profiles 22 ist eine sphärisch gekrümmte Nase 22.10. Ein auf der Rückseite, am gleichen Ende sich befindlicher C-schienenförmiger Kanal 22.3 ist in einem Winkel von ca. 45° zur rückseitigen Profiloberfläche hin geöffnet.

Die einzelnen Funktioneinheiten werden wie folgt fabriziert und montiert :

Das Profil 18 des Kabelkanals wird abgelängt, beispielsweise auf Wagenabteilslänge, die Querlöcher 18.21 werden gebohrt und es wird die (sichtbare) Oberfläche 18.11 behandelt. Die eigentliche Vormontage besteht im Einlegen eines Kabelbündels 12.1 im Kabelkanal 12. Die Montage im Wageninnern erfolgt mittels einer Schraube 24 und einer Mutterplatte 23 an der C-Schiene 17.1. Beim längsseitigen Zusammenfügen weiterer Kabelkanäle werden, zwecks absatzfreier Übergänge, einseitig Passstifte in die dreiviertelkreisförmigen Kanäle 18.14 und 18.5 eingelegt. Das Einfügen der Deckenverkleidungsplatte 19 in die Nut 18.13 kann zusammen mit der Kabelkanalmontage oder eventuell später erfolgen.

Das Profil 20 der Beleuchtung 13 wird auf ein bestimmtes Rastermass abgelängt und mit den Querlöchern 20.33 und 20.34 versehen. An vorgegebenen Positionen wird je ein Supportblech 22.4 beim C-schienenförmigen Kanal 20.41 an das Profil 20 angeschraubt. Dann werden ferner die Lichtaustrittsöffnungen und die Lautsprecheröffnungen herausgearbeitet. Eine Oberflächenbehandlung beendet die Bearbeitungsphase. Die Beleuchtung 13, bestehend aus einem Reflektorgehäuse 13.1, einem Vorschaltgerät 13.3 und einer Fluoreszenzröhre 13.2 wird im Hohlraum 20.2 am C-schienenförmigen Kanal 20.23 festgeschraubt. Ein in Fig. 2 nicht sichtbarer Lautsprecher 11 wird auf gleiche Art eingebaut. Das Anbringen einer transparenten Abdeckung für die Lichtaustrittsöffnung und einer z.B. lochgerasterten Abdeckung der Lautsprecheröffnung beenden die mechanische Montagearbeit. Die beim Montieren von Beleuchtung 13 und Lautsprecher 11 durch eine Querbohrung 20.34 herausgeführten elektrischen Anschlussleitungen werden auf eine Klemme 20.13 geführt und dort angeschlossen. Nach erfolgter Funktionsprüfung ist die Funktionseinheit Beleuchtung einbaubereit. Beim Einbau im Wageninnern wird die Funktionseinheit Beleuchtung mit dem hakenförmigen Ende 20.32 des Profiles 20 an der sphärisch gekrümmten Nase 18.3 des Profiles 18 angehängt und die elektrische Verbindung zwischen Klemme 20.13 und Kabel 12.1 hergestellt. Dann wird die Funktionseinheit eingeschwenkt bis zum Anschlagen an der C-Schiene 17.2 und längs zusammengeschoben, wobei eingesetzte Passstifte in den dreiviertelkreisförmigen Kanälen 20.7 und 20.8 einen absatzfreien Übergang von einer Funktionseinheit zur nächsten ergeben. Durch die Bohrung 20.33 erfolgt dann noch die Verschraubung mit dem Wagenkasten 1 via C-Schiene 17.2 und Halteprofil 16.

Nach dem Ablängen, Bohren und Oberflächenbehandeln des Profiles 21 der Gepäckablage 14 wird das Dichtlippenprofil 21.6 eingezogen, werden die Holme 21.7 in den Kanal 21.2 eingepresst, die Kanal-Zwischenräume zwischen den Holmen abgedeckt und wird das Randprofil 21.8 auf die herausragenden Holmenden aufgepresst. Der Einbau erfolgt durch Einhängen der Nase 21.3 in die Nut 20.62, Anschmiegen des Dichtlippenprofils 21.6 am Schenkel 18.1 des Profiles 18, Anschlagen mit dem unteren Teil an Profil 20 und abschliessendem Verschrauben mit Profil 21 beim C-schienenförmigen Kanal 20.61. Ablängen des Profiles 22 für das Rollo 15 auf Fensterrastermass und bohren der Querlöcher 22.6 und 22.9 sind die mechanischen Bearbeitungsoperationen. Nach erfolgter Oberflächenbehandlung wird die Rolloarmatur, bestehend aus einer Rollotrommel 15.1, einem Trägersupport 22.5 mit einem Schnellverschluss 22.7 und einer Rollo-Zuggriffleiste 15.2 am C-schienenförmigen Kanal 22.3 mit dem Profil 22 verschraubt. Ein Aufhängehaken 22.8 wird an der Nase 22.21 angehängt und bei der Bohrung 22.9 mit dieser verschraubt oder vernietet. Beim Einbau des Rollos wird vorerst ein Stück Rollostoff von der Trommel abgerollt, dann die Rollo-Zuggriffleiste mit etwas Rollostoff in die Rille beim Fenster 5 eingefädelt, dann das Profil 22 mit der sphärisch gekrümmten Nase 22.3 in die ebenso gekrümmte Nut 20.42 des Profiles 20 hineingeschoben, die ganze Funktionseinheit bis zum mechanischen Anschlag nach oben geschwenkt und mittels dem Dreh-Schnellverschluss 22.7 via Montagebohrung 22.7 in ihrer Endlage fixiert.

Gemäss Figur 2 weisen die Profile 18, 20, 21, 22 jene Formen auf, wie sie bei ihrer Anwendung im Unterdeck gebraucht werden. Bei ihrer Anwendung in den Oberdeckeinbauten weisen die Profile 18, 20, 21, 22 die gleichen Funktionen und Merkmale auf, können aber, aufgrund der veränderten Wagenkasten-Innenkontur entsprechend angepasste Querschnittsformen aufweisen.

Beim Profil 20 kann die den Hohlraum 20.2 abgrenzende Wand 20.1 mit der sichtbaren Oberfläche 20.11 wegfallen, und es kann die sichtbare Oberfläche mit den eingebauten Bauteilen (Beleuchtung, Lautsprecher) gebildet werden. Es können, zwecks Versteifung, zusätzlich Verstärkungsrippen vorgesehen werden.

Das Halteprofil 16 kann auch mit einer unlösbaren oder bedingt lösbaren Verbindung (kleben, schweissen, nieten) am Wagenkasten 1 befestigt werden. Der Kabelkanal 12 kann unterteilt sein und eine entfernbare Abdeckung aufweisen.

Die Profile 18, 20, 21, 22 können aus irgendeinem Werkstoff bestehen. Es ist möglich, die Anzahl der Funktionseinheiten zu verkleinern oder zu vergrössern. In diesem Sinne wäre eine Erweiterung mit einer Klima- und Lüftungsfunktion zu verstehen. Den Funktionseinheiten können bei entsprechender Ausbildung noch andere, bzw. zusätzliche Aufgaben zugeordnet werden, wie z.B. optische Signale, Hydraulik- und Luftinstallationen, mechanische Aggregate und zusätzliche Wagenkastenversteifung. Das Prinzip der Erfindung ist auch für Strassen-, Wasser-, Luft- und Raumfahrzeuge anwendbar.

## Patentansprüche

1. Fahrzeug-Innenausbau, insbesondere von Eisenbahnwagen in ein- oder zweistöckiger Ausführung mittels einer Anzahl vom Wagenkasten (1) konstruktiv getrennt ausserhalb des Fahrzeuges fertig vorfabrizierten Funktionseinheiten (12, 13, 14, 15) welche im Wagenkasten zu einer grösseren, mehrere Funktionen enthaltenen Montageeinheit (7) zusammenfügbar und im Wagenkasten (1) an vorhandenen Fixpunkten (17.1, 17.2) befestigbar sind, dadurch gekennzeichnet,

dass ein als Träger eines Kabelbündels (18.1) ausgebildetes erstes Profil (18) Befestigungsmittel (18.21, 23, 24) zur Befestigung am Wagenkasten (1) aufweist, und dass weitere, als Träger mindestens einer der Funktionen Beleuchtung (13), Lautsprecher (11), Rollo (15), Teilabdeckung (9) ausgebildete Profile (20, 21, 22) mindestens je ein Befestigungsmittel (20.42, 22.10) zur Befestigung an einem der benachbarten Profile (18, 20, 21, 22) besitzen.

2. Fahrzeug-Innenausbau nach Anspruch 1, **dadurch gekennzeichnet,** dass mindestens zwei Profile (18, 20, 22) sphärisch gekrümmte Nuten und Federn (20.3, 18.10, 20.12, 22.10) aufweisen, mittels welchen diese Profile (18, 20.2) durch eine Einhänge- und nachfolgende Drehbewegung, in der Art eines trennbaren Scharniers zusammengefügt, zueinander eine formschlüssige Verbindung bilden.

3. Fahrzeug-Innenausbau nach Anspruch 1, **dadurch gekennzeichnet,** dass das Befestigungsmittel der gemäss einer bestimmten Einbaureihenfolge letzten Funktionseinheit (15) nebst der formschlüssigen Verbindung mit einer benachbarten Funktionseinheit (20) ein durch eine Montagebohrung (22.6) zugänglicher Dreh-Schnellverschluss (22.7) ist.

4. Fahrzeug-Innenausbau nach Anspruch 1, **dadurch gekennzeichnet,** dass die Profile (18, 20, 21, 22) vorzugsweise stranggepresste Alu-Profile mit mindestens einer eine Verkleidungsoberfläche (9) des Wageninnenausbaues bildenden Oberflächenseite (21.1, 20.11, 22.1) sind.

5. Fahrzeug-Innenausbau nach Anspruch 1, **dadurch gekennzeichnet,** dass bei mindestens zwei benachbarten Teilstücken eines Profiles (18, 20) mindestens eine aus Passstift und Passöffnung bestehende, einen absatzfreien Übergang bildende Stossverbindung (18.14, 18,5, 20.7, 20.8) vorgesehen ist.

## Claims

1. Interior vehicle fitting-out, in particular of railway carriages in single-decked or double-decked construction, by means of a number of functional units (12, 13, 14, 15), which are constructionally separate from the vehicle body (1) and prefabricated ready outside the vehicle and which are unitable in the vehicle body into a larger assembly unit (7) containing several functions and fastenable to fixing points (17.1, 17.2) present in the vehicle body (1),

characterised thereby, that a first profile (18) is constructed as carrier of a cable bundle (18.1) and displays fastening means (18.21, 23, 24) for fastening to the vehicle body (1) and that further profiles (20, 21, 22) are constructed as carriers of at least one of the functions of illumination (13), loudspeaker (11), roller blind (15) and partial panelling (9) and each possess at least one fastening means (20.42, 22.10) for fastening to one of the neighbouring profiles (18, 20, 21, 22).

2. Interior vehicle fitting-out according to claim 1, characterised thereby, that at least two profiles (18, 20, 22) display spherically curved grooves and keys (20.3, 18.10, 20.12, 22.10), by means of which these profiles (18, 20.2) form a shape-locking connection one with the other by a hooking-in and subsequent rotary movement, being assembled in the manner of a separable hinge.

3. Interior vehicle fitting-out according to claim 1, characterised thereby, that the fastening means of the functional unit (15), which is the last according to a certain installation sequence is — apart from the shape-locking connection with a neighbouring functional unit — a rotary quick fastening (22.7) accessible through an assembly bore (22.6).

4. Interior vehicle fitting-out according to claim 1, characterised thereby, that the profiles (18, 20, 21, 22) are preferably extruded aluminium profiles with at least one surface side (21.1, 20.11, 22.1) forming a panelling surface (9) of the interior vehicle fitting-out.

5. Interior vehicle fitting-out according to claim 1, characterised thereby, that at least one butt joint (18.14, 18.5, 20.7, 20.8), which consists of dowel pin and dowel opening and forms a stepless transition, is provided for at least two neighbouring portions of a profile (18, 20).

## Revendications

1. Aménagement intérieur de véhicule, notamment de véhicules ferroviaires, du type à un ou deux étages, réalisé à l'aide d'un certain nombre d'unités fonctionnelles (12, 13, 14, 15) préfabriquées finies, construites séparément de la construction de la carrosserie (1), à l'extérieur du véhicule, ces unités fonctionnelles pouvant être assemblées dans la carrosserie pour former une unité de montage (7) plus grande contenant plusieurs fonctions, et pouvant être fixées dans la carrosserie (1) en des points de fixations existants (17.1, 17.2), caractérisé par le fait

qu'un premier profilé (18), agencé sous la forme d'un support de faisceau de câbles (18.1), comporte des moyens de fixation (18.21, 23, 24) pour sa fixation à la carrosserie (1) du véhicule, et que d'autres profilés (20, 21, 22), qui sont agencés sous la forme de supports d'au moins l'une des fonctions : dispositif d'éclairae (13), haut-parleur (11), store (15), élément de garniture (9), possèdent chacun au moins un moyen de fixation (20.42, 22.10) permettant une fixation à l'un des profilés voisins (18, 20, 21, 22).

2. Aménagement intérieur de véhicule selon la revendication 1, caractérisé en ce qu'au moins deux profilés (18, 20, 22) comportent des rainures et languettes de forme cintrée sous une forme sphérique (20.3, 18.10, 20.12, 22.10), à l'aide desquelles ces profilés (18, 20.2) établissent une liaison par complémentarité de formes entre eux, étant assemblés à la façon d'une charnière démontable, par un mouvement d'accrochage suivi d'un mouvement de rotation.

3. Aménagement intérieur de véhicule selon la revendication 1, caractérisé en ce que le moyen de fixation de la dernière unité fonctionnelle (15) d'une séquence de montage déterminée est, en dehors de la liaison par complémentarité de formes avec une unité fonctionnelle (20) voisine, un organe de fermeture rapide par rotation (22.7) accessible à travers un orifice de montage (22.6).

4. Agencement intérieur de véhicule selon la revendication 1, caractérisé en ce que les profiés (18, 20, 21, 22) sont de préférence des profilés en aluminium extrudés comportant au moins une face extérieure (21.1, 20.11, 22.1) constituant une surface d'habillage (9) de l'aménagement intérieur de la voiture.

5. Aménagement intérieur de véhicule selon la revendication 1, caractérisé en ce que dans le cas d'au moins deux éléments partiels voisins d'un profilé (18, 20), il est prévu au moins une liaison en aboutement (18.14, 18.5, 20.7, 20.8) constituée par un goujon d'assemblage et une ouverture d'assemblage et formant une jonction sans décrochement.

# Fig.1

# Fig.2